# EUROPEAN PATENT SPECIFICATION

(11) **EP 1 091 074 B1**
(45) Date of publication and mention of the grant of the patent: **20.07.2005**
(21) Application number: 00119227.7
(22) Date of filing: 06.09.2000
(51) Int. Cl.: E05F 15/18, B60J 1/17

(54) **Window systems for automotive vehicle**
Kraftfahrzeug-Fenstersystem
Système de vitre pour véhicule automobile

(30) Priority: 05.10.1999 GB 9923398
(43) Date of publication of application: 11.04.2001
(73) Proprietor: Bayerische Motoren Werke Aktiengesellschaft, 80809 München (DE)
(72) Inventor: Waltz, Uwe, 85406 Zolling (DE); Steingrübner, Mihai, 85757 Karlsfeld (DE)

(56) References cited:
- EP-A- 0 712 170
- US-A- 5 087 851
- US-A- 5 780 956
- US-A- 5 780 957

## Description

This invention relates to window systems and in particular, but not exclusively, to a window system for raising and/or lowering a vehicle window under power.

It is known to provide a system for raising and/or lowering one or more windows under power and it is also known to use such a system in a vehicle. One such prior art window system is disclosed in US 5,469,662.

Some prior art window systems include a window drive arrangement which might be considered to be bulky and heavy and to be not very precise in positioning the window.

EP 0 712 170 A discloses a piezoelectric motor unit. A plurality of piezoelectric motor units operate directly on a car window to have it vertically translated.

It is an object of this invention to provide an improved window system which is suitable for use in a vehicle.

Accordingly, the invention provides a window system suitable for use in a vehicle, the system including a window, a powered drive means which is arranged in use to move said window and a guide means which is arranged in use to guide a movement of said window along a substantially predetermined path, and that said drive means comprises a piezo-drive actuator.

In the first window system according to the invention said guide means include a channel portion, wherein said piezo-drive actuator includes at least one inner-lying piezo-drive element which operates according to a reciprocal piezo-effect substantially inside said channel portion.

In the second window system according to the invention said piezo-drive actuator includes at least one outer-lying piezo-drive element which operates according to a reciprocal piezo-effect substantially along the outside of said guide means.

A said inner- or outer-lying piezo-drive element may have a single driving profile arranged in use to displace said piezo-drive actuator along said guide means.

A said inner- or outer-lying piezo-drive element may have a plurality of driving profiles arranged in use to co-operate so as to displace said piezo-drive actuator along said guide means.

Said piezo-drive actuator may operate according to an inchworm principle, a travelling wave principle or a caged-rocker principle.

Said piezo-drive actuator may be arranged to move said window, at least in part, by means of a frictional driving connection.

Said piezo-drive actuator may be arranged to provide a window-holding function which holds said window in a substantially fixed position. Said piezo-drive actuator may be arranged to frictionally lock itself against or grip said guide means so as to provide said window-holding function.

Said system may further include a sensing means arranged in use to provide a signal to a piezo-drive actuator control means, which signal is indicative of one or more of the displacement of said window, the force necessary to move said window and an anti-trap warning. Said sensing means may use a direct piezo-effect of said piezo-drive actuator so as to produce said signal.

Said system may further comprise at least one further guide means and associated further piezo-drive actuator, the operation of said piezo-drive actuators being substantially synchronised.

The invention will now be described by way of example only and with reference to the accompanying drawings, in which:
Figure 1 is a schematic diagram of a vehicle door including a window system according to the invention;
Figure 2a is a schematic diagram of part of a window drive means of Figure 1 according to a first embodiment of the invention;
Figure 2b is a schematic diagram of part of a window drive means of Figure 1 according to a second embodiment of the invention;
Figure 2c is a schematic diagram of part of a window drive means of Figure 1 according to a third embodiment of the invention;
Figure 2d is a schematic diagram of part of a window drive means of Figure 1 according to a fourth embodiment of the invention;
Figure 3a is an end view of a drive means according to a fifth embodiment of the invention; and
Figure 3b is a section through the drive means of Figure 3a along the line AA-AA.

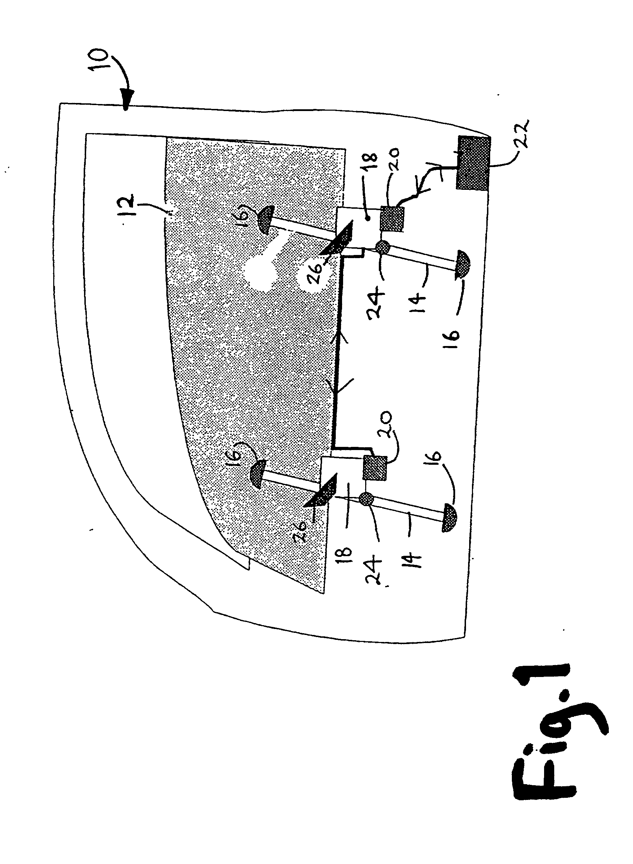

Referring first to Figure 1, a door 10 of a vehicle (not shown further) includes a window 12 which can be moved up and down into open, closed and intermediate positions (an intermediate position being shown).

The window 12 is driven between its operating positions by a powered drive means, which is guided in its direction of movement to and fro along a substantially predetermined path by a guide means. The guide means comprises a pair of guide members 14 which are fixed to the door 10 at fixing points 16.

The drive means is in the form of an individual piezo-drive actuator 18, associated one each with each guide member 14. Each piezo-drive actuator 18 includes an integrated control circuit 20 and these 20 are connected in parallel to a window-lift control module 22, so as to allow synchronisation of the piezo-drive actuators 18.

The piezo-drive actuators 18 incorporate a sensing means in the form of transducers 24 for providing signals to the control module 22. These signals indicate to the control module 22 the force necessary to move the window 12, the window position and also act as an anti-trap warning means. The piezo-drive actuators 18 are connected to the window 12 by means of connecting elements 26, which transmit a lifting or lowering movement to the window 12 from the movement to and fro along the guide members 14 of the piezo-drive actuators 18.

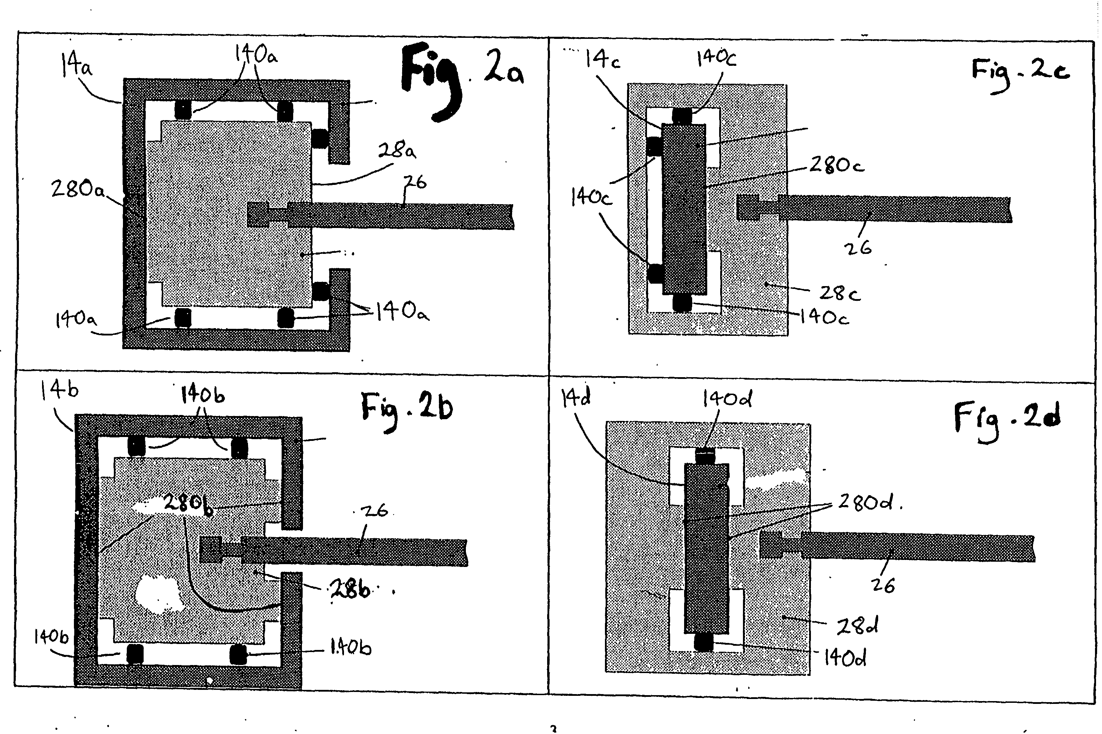

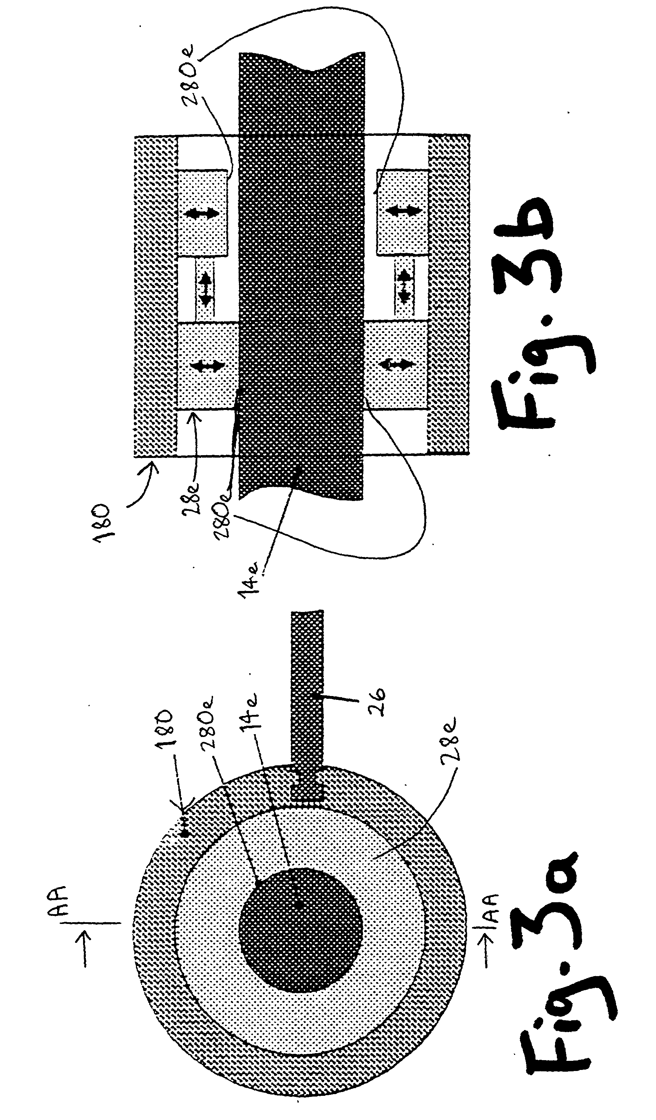

Preferred embodiments of the piezo-drive actuators 18, at least in so far as is necessary to indicate how drive is translated to the guide members 14, will now also be described by referring in turn also to Figures 2a, 2b, 2c, 2d and Figures 3a and 3b.

In each of these embodiments, however, displacement of the drive means on the guide means is performed by employing a frictional connection therebetween. In similar fashion, the system provides a window holding function in which the drive means is arranged to frictionally grip the guide means to as to substantially lock the window in place.

In Figure 2a, a guide member 14 is shown in the form of a channel member 14a. The piezo-drive actuator 18 includes at least one inner-lying piezo-drive element 28a, which is disposed on the inside of the channel member 14a. The control module 22 and the integrated control circuit 20 form a control means which uses the reciprocal piezo-effect, i.e. electrical to mechanical translation, so as to cause an actuator profile in the form of a substantially flat edge 280a to climb or descend the inside of the channel member 14a. The piezo-drive element 28a is in sliding contact on its other surfaces with the channel member 14a by means of slider elements 140a.

In Figure 2b, a guide member 14 is shown in the form of a channel member 14b. The piezo-drive actuator 18 includes at least one inner-lying piezo-drive element 28b, which is disposed on the inside of the channel member 14b. The control module 22 and the integrated control circuit 20 form a control means which uses the reciprocal piezo-effect, i.e. electrical to mechanical translation, so as to cause a plurality of actuator profiles in the form of substantially flat edges 280b to climb or descend the inside of the channel member 14b. The piezo-drive element 28b is in sliding contact on its other surfaces with the channel member 14b by means of slider elements 140b.

In Figure 2c, a guide member 14 is shown in the form of a track member 14c. The piezo-drive actuator 18 includes at least one outer-lying piezo-drive element 28c, which is disposed on the outside of the track member 14c. The control module 22 and the integrated control circuit 20 form a control means which uses the reciprocal piezo-effect, i.e. electrical to mechanical translation, so as to cause an actuator profile in the form of a substantially flat edge 280c to climb or descend the outside of the track member 14c. The piezo-drive element 28c is in sliding contact on its other surfaces with the track member 14c by means of slider elements 140c.

In Figure 2d, a guide member 14 is shown in the form of a track member 14d. The piezo-drive actuator 18 includes at least one outer-lying piezo-drive element 28d, which is disposed on the outside of the track member 14d. The control module 22 and the integrated control circuit 20 form a control means which uses the reciprocal piezo-effect, i.e. electrical to mechanical translation, so as to cause a plurality of actuator profiles in the form of substantially flat edges 280d to climb or descend the outside of the track member 14d. The piezo-drive element 28d is in sliding contact on its other surfaces with the track member 14d by means of slider elements 140d.

In Figures 3a and 3b, the piezo-drive actuator comprises an inchworm type of actuator 180. The principle of operation of this type of actuator is known in the prior art and examples can be found in GB 2303881, US 3902084, US 3902085 and in US 5027027.

The guide means is in the form of a track member 14e and the inchworm actuator 180 comprises an outer-lying piezo-drive element 28e which is disposed on the outside of that track member 14e. The control module 22 and the integrated control circuit 20 form a control means which uses the reciprocal piezo-effect, i.e. electrical to mechanical translation, so as to cause a plurality of actuator profiles 280e to displace the actuator 180 to and fro along the track member 14e.

The use of piezo-drive actuators 18, 180 as a window lift drive means provides a system with reduced parts count, weight and friction, when compared to some prior art systems. The invention, however, is not limited to the use of actuators which operate according to only an inchworm principle and, for example, actuators could be used which operate according to a travelling wave principle or according to a caged rocker principle.

The intelligence of the system is shifted away from prior art mechanical implementation to inherently more accurate electronic control. The piezo-drive actuators 18, 180 can control the position of the window more accurately than electric motors by using fine increments in their displacement of the window 12.

It will be apparent to the skilled man that modifications can be made to the invention without affecting its true nature. For example, it is clear that it is not essential to use a plurality of piezo-drive actuators 18. The window could, furthermore, be moved by the piezo-drive element 28a, 28b, 28c, 28d, 28e directly rather than being connected to it by a connecting element 26.

In a modification to the invention, no separate transducer 24 is used in order to implement the sensing means. Instead, the sensing means is implemented using the piezo-drive actuator drive element 28a, 28b, 28c, 28d, 28e itself. The sensing is achieved using the direct piezo-effect of the drive element 28a, 28b, 28c, 28d, 28e, i.e. mechanical to electrical translation.

## Claims

1. A window system suitable for use in a vehicle, the system including a window (12), a powered drive means (18) which is arranged in use to move said window (12) and a guide means (14) which is arranged in use to guide a movement of said window along a substantially predetermined path, and said drive means comprises a piezo-drive actuator (18), **characterised in that** said guide means (14) including a channel portion (14a; 14b; 14c; 14d), wherein said piezo-drive actuator (18) includes at least one inner-lying piezo-drive element (28a; 28b) which operates according to a reciprocal piezo-effect substantially inside said channel portion.

2. A window system suitable for use in a vehicle, the system including a window (12), a powered drive means (18) which is arranged in use to move said window (12) and a guide means (14) which is arranged in use to guide a movement of said window along a substantially predetermined path, and said drive means comprises a piezo-drive actuator (18), **characterised in that** said piezo-drive actuator (18) includes at least one outer-lying piezo-drive element (28c; 28d) which operates according to a reciprocal piezo-effect substantially along the outside of said guide means.

3. A system according to Claim 1 or Claim 2, wherein a said inner- or outer-lying piezo-drive element (28a; 28b; 28c; 28d) has a single driving profile arranged in use to displace said piezo-drive actuator (18) along said guide means (14).

4. A system according to Claim 1 or Claim 2, wherein a said inner- or outer-lying piezo-drive element (28a; 28b; 28c; 28d) has a plurality of driving profiles arranged in use to co-operate so as to displace said piezo-drive actuator (18) along said guide means.

5. A system according to any preceding claim, wherein said piezo-drive actuator (18) operates according to an inchworm principle, a travelling wave principle or a caged-rocker principle.

6. A system according to any preceding claim, wherein said piezo-drive actuator (18) is arranged to move said window (12) at least in part, by means of a frictional driving connection.

7. A system according to any preceding claim, wherein said piezo-drive actuator (18) is arranged to provide a window-holding function which holds said window in a substantially fixed position.

8. A system according to Claim 7, wherein said piezo-drive actuator (18) is arranged to frictionally lock itself against or grip said guide means (14) so as to provide said window-holding function.

9. A system according to any preceding claim, further including a sensing means (24) arranged in use to provide a signal to a piezo-drive actuator control means (20), which signal is indicative of one or more of the displacement of said window (12), the force necessary to move said window and an anti-trap warning.

10. A system according to Claim 9, wherein said sensing means (24) uses a direct piezo-effect of said piezo-drive actuator (18) so as to produce said signal.

11. A system according to any preceding claim, further comprising at least one further guide means and associated further piezo-drive actuator, the operation of said piezo-drive actuators being substantially synchronised.

## Patentansprüche

1. Fenstersystem, das zur Verwendung in einem Fahrzeug geeignet ist, wobei das System ein Fenster (12), ein kraftbetätigtes Antriebsmittel (18), das vorgesehen ist, um im Gebrauch das Fenster (12) zu bewegen, sowie ein Führungsmittel (14) beinhaltet, das vorgesehen ist, um im Gebrauch eine Bewegung des Fensters entlang einer im wesentlichen vorbestimmten Bahn zu führen, wobei das Antriebsmittel einen Piezoantriebsbetätiger (18) umfaßt, **dadurch gekennzeichnet, daß** das Führungsmittel (14) einen Kanalabschnitt (14a; 14b; 14c; 14d) beinhaltet, wobei der Piezoantriebsbetätiger (18) mindestens ein innenliegendes Piezoantriebselement (28a; 28b) beinhaltet, das gemäß einem Piezowechseleffekt im wesentlichen im Inneren des Kanalabschnitts arbeitet.

2. Fenstersystem, das zur Verwendung in einem Fahrzeug geeignet ist, wobei das System ein Fenster (12), ein kraftbetätigtes Antriebsmittel (18), das so vorgesehen ist, daß es im Gebrauch das Fenster (12) bewegt, sowie ein Führungsmittel (14) beinhaltet, das so vorgesehen ist, daß es im Gebrauch eine Bewegung des Fensters entlang einer im wesentlichen vorbestimmten Bahn führt, wobei das Antriebsmittel einen Piezoantriebsbetätiger (18) umfaßt, **dadurch gekennzeichnet, daß** der Piezoantriebsbetätiger (18) mindestens ein außenliegendes Piezoantriebselement (28c; 28d) beinhaltet, das gemäß einem Piezowechseleffekt im wesentlichen entlang der Außenseite des Führungsmittels arbeitet.

3. System nach Anspruch 1 oder Anspruch 2, bei dem ein innen- oder außenliegendes Piezoantriebselement (28a; 28b; 28c; 28d) ein einzelnes Antriebsprofil hat, das so vorgesehen ist, daß es im Gebrauch den Piezoantriebsbetätiger (18) entlang dem Führungsmittel (14) verschiebt.

4. System nach Anspruch 1 oder Anspruch 2, bei dem ein innen- oder außenliegendes Piezoantriebselement (28a; 28b; 28c; 28d) mehrere Antriebsprofile hat, die vorgesehen sind, um im Gebrauch zusammenzuwirken, um den Piezoantriebsbetätiger (18) entlang dem Führungsmittel zu verschieben.

5. System nach einem der vorstehend aufgeführten Ansprüche, bei dem der Piezoantriebsbetätiger (18) gemäß einem Raupenprinzip, einem Wanderwellenprinzip oder einem Rasthebelprinzip arbeitet.

6. System nach einem der vorstehend aufgeführten Ansprüche, bei dem der Piezoantriebsbetätiger (18) so vorgesehen ist, daß er das Fenster (12) mindestens teilweise mittels einer Reibantriebsverbindung bewegt.

7. System nach einem der vorstehend aufgeführten Ansprüche, bei dem der Piezoantriebsbetätiger (18) vorgesehen ist, um eine Fensterhaltefunktion bereitzustellen, die das Fenster in einer im wesentlichen feststehenden Position hält.

8. System nach Anspruch 7, bei dem der Piezoantriebsbetätiger (18) vorgesehen ist, um sich selbst gegenüber dem Führungsmittel (14) durch Reibungseingriff zu verriegeln oder dieses zu ergreifen, so daß die Fensterhaltefunktion bereitgestellt wird.

9. System nach einem der vorstehend aufgeführten Ansprüche, das weiterhin ein Sensormittel (24) beinhaltet, das vorgesehen ist, um im Gebrauch ein Signal an ein Piezoantriebsbetätigersteuerungsmittel (20) bereitzustellen, wobei dieses Signal eine oder mehrere der Verschiebungen des Fensters (12), die zur Bewegung des Fensters erforderliche Kraft sowie eine Einklemmwarnung anzeigt.

10. System nach Anspruch 9, bei dem das Sensormittel (24) einen direkten Piezoeffekt des Piezoantriebsbetätigers (18) verwendet, um das Signal zu erzeugen.

11. System nach einem der vorstehend aufgeführten Ansprüche, das weiterhin mindestens ein weiteres Führungsmittel und einen weiteren zugeordneten Piezoantriebsbetätiger umfaßt, wobei der Betrieb der Piezoantriebsbetätiger im wesentlichen im Gleichlauf erfolgt.

## Revendications

1. Système de vitre destiné à être convenablement utilisé dans un véhicule, ce système comprenant une vitre (12), un moyen d'entraînement à moteur (18) disposé, en cours d'utilisation, pour déplacer la vitre (12), et un moyen de guidage (14) disposé, en cours d'utilisation, pour guider le mouvement de la vitre suivant un chemin essentiellement prédéterminé, le moyen d'entraînement comprenant un actionneur de piézocommande (18),
**caractérisé en ce que**
le moyen de guidage (14) comprend une partie de canal (14a, 14b, 14c, 14d), l'actionneur de piézocommande (18) comprenant au moins un élément de piézocommande se situant intérieurement (28a, 28b), qui fonctionne suivant un effet piézo-électrique réciproque essentiellement à l'intérieur de la partie de canal.

2. Système de vitre destiné à être convenablement utilisé dans un véhicule, ce système comprenant une vitre (12), un moyen d'entraînement à moteur (18) disposé, en cours d'utilisation, pour déplacer la vitre (12), et un moyen de guidage (14) disposé, en cours d'utilisation, pour guider le mouvement de la vitre suivant un chemin essentiellement prédéterminé, le moyen d'entraînement comprenant un actionneur de piézocommande (18),
**caractérisé en ce que**
l'actionneur de piézocommande (18) comprend au moins un élément de piézocommande se situant à l'extérieur (28c, 28d) qui fonctionne suivant un effet piézo-électrique réciproque essentiellement le long de l'extérieur du moyen de guidage.

3. Système selon l'une quelconque des revendication 1 ou 2,
dans lequel
l'élément de piézocommande se situant intérieurement ou extérieurement (28a, 28b, 28c, 28d) comporte un profil d'entraînement unique disposé, en cours d'utilisation, pour déplacer l'actionneur de piézocommande (18) le long du moyen de guidage (14).

4. Système selon l'une quelconque des revendications 1 ou 2,
dans lequel
l'élément de piézocommande se situant intérieurement ou extérieurement (28a, 28b, 28c, 28d) comporte un certain nombre de profils d'entraînement disposés, en cours d'utilisation, pour coopérer de manière à déplacer l'actionneur de piézocommande (18) le long du moyen de guidage.

5. Système selon l'une quelconque des revendications précédentes,
dans lequel
l'actionneur de piézocommande (18) fonctionne suivant un principe à vis d'avancement lent, un principe à onde progressive, ou un principe à basculer en boîtier.

6. Système selon l'une quelconque des revendications précédentes,
dans lequel
l'actionneur de piézocommande (18) est disposé pour déplacer la vitre (12) en partie au moins, au moyen d'une liaison d'entraînement à friction.

7. Système selon l'une quelconque des revendications précédentes,
dans lequel
l'actionneur de piézocommande (18) est disposé pour assurer une fonction de porte-vitre qui maintient la vitre dans une position essentiellement fixe.

8. Système selon la revendication 7,
dans lequel
l'actionneur de piézocommande (18) est disposé pour se verrouiller de lui-même en friction contre le moyen de guidage (14) ou pour saisir ce moyen de guidage (14), de manière à assurer la fonction de porte-vitre.

9. Système selon l'une quelconque des revendications précédentes,
dans lequel
un moyen de détection (24) disposé, en cours d'utilisation, pour fournir un signal à un moyen de commande d'actionneur de piézocommande (20), ce signal indiquant l'un ou plusieurs du déplacement de la vitre (12), de la forme nécessaire pour déplacer cette vitre, et d'une alarme anti-coïncement.

10. Système selon la revendication 9,
dans lequel
le moyen de détection (24) utilise un effet piézo-électrique direct de l'actionneur de piézocommande (18) pour produire le signal ci-dessus.

11. Système selon l'une quelconque des revendications précédentes,
comprenant en outre
l'un au moins d'un autre moyen de guidage et d'un autre moyen de piézocommande associé, les opérations de fonctionnement de ces actionneurs de piézocommande étant essentiellement synchronisées.
